# EUROPÄISCHE PATENTANMELDUNG

(11) **EP 3 978 332 A1**
(43) Veröffentlichungstag der Anmeldung: **06.04.2022**
(21) Anmeldenummer: 21179041.5
(22) Anmeldetag: 11.06.2021
(51) Int. Cl.: B61L 15/00, B61L 23/04, B61L 25/02

(54) **VERFAHREN ZUR ÜBERPRÜFUNG DER KALIBRIERUNG EINES AUF EINEM SCHIENENFAHRZEUG ANGEORDNETEN UMFELDSENSORS**

(30) Priorität: 30.09.2020 DE 102020212374
(71) Anmelder: Siemens Mobility GmbH, 81739 München (DE)
(72) Erfinder: Hoppe, Christof, 48147 Münster (DE)

(57) **Zusammenfassung**

Die Erfindung betrifft Verfahren zur Überprüfung der Kalibrierung eines auf einem Schienenfahrzeug (1) angeordneten Umfeldsensors (2), der zur Erfassung von Bilddatensätzen, die dreidimensionale Positionsdaten von in seinem Sichtfeld liegenden Objekten (O) enthalten, ausgebildet ist. Mit dem Schienenfahrzeug (1) wird ein geradlinig verlaufender Gleisabschnitt (3) befahren und währenddessen vom Umfeldsensor (2) eine Folge von Bilddatensätzen erfasst. Aus der erfassten Folge von Bilddatensätzen wird eine Folge von Positionsdaten wenigstens eines stationären Objektes (O) ermittelt. Aus der ermittelten Folge von Positionsdaten wird eine Relativbewegungsrichtung (v') des wenigstens einen stationären Objektes (O) relativ zum Schienenfahrzeug (1) bestimmt. Es wird ein Winkelversatz (α) zwischen der bestimmten Relativbewegungsrichtung (v') und einer sich aus dem Verlauf des befahrenen Gleisabschnitts (3) ergebende Fahrtrichtung (v) des Schienenfahrzeugs (1) berechnet. Hierdurch kann die Kalibrierung des Umfeldsensors (2) während der Fahrt überprüft und gegebenenfalls korrigiert werden.

## Beschreibung

Die Erfindung bezieht sich auf Verfahren zur Überprüfung der Kalibrierung eines auf einem Schienenfahrzeug angeordneten Umfeldsensors.

Schienenfahrzeuge, wie zum Beispiel Straßenbahnen oder Regionalzüge, die mit einem Fahrerassistenzsystem ausgestattet sind, benötigen zur Umfelderfassung einen oder meist sogar mehrere Umfeldsensoren. Dabei kommen Umfeldsensoren zum Einsatz, wie zum Beispiel Lidarsensoren, Laserscanner, Laufzeitkameras und dergleichen, deren erfasste Bilddatensätze dreidimensionale Positionsdaten von Objekten, insbesondere von potenziellen Hindernissen, enthalten, die in einem durch das Sichtfeld des Umfeldsensors begrenzten Umfeldausschnitt liegen.

Die Umfeldsensoren sind dabei - zusätzlich zu einer intrinsischen Kalibrierung - exakt extrinsisch zu kalibrieren, um die vom Umfeldsensor erfassten Umfeldinformationen aus einem sensorseitigen Koordinatensystemen korrekt in ein fahrzeugseitiges Koordinatensystem transformieren zu können. Dies bildet die Grundlage für eine fehlerfreie Lagebestimmung von Objekten relativ zum Schienenfahrzeug aus den erfassten Bilddatensätzen und für eine Datenfusion der erfassten Bilddatensätze mit denen weiterer Umfeldsensoren, um dem Fahrerassistenzsystem Umfeldinformationen mit hinreichender Qualität etwa zur Objekt- und Hinderniserkennung zur Verfügung stellen zu können.

Zur extrinsischen Kalibrierung eines Umfeldsensors, um die es im Folgenden geht, ist also die Koordinatentransformation zu bestimmen, die sich aus einer Translation, um welche der Ursprung des sensorseitigen Koordinatensystems gegenüber dem fahrzeugseitigen Koordinatensystem verschoben ist, und einer Rotation, um welche die Achsenausrichtungen des sensorseitigen Koordinatensystems gegenüber dem fahrzeugseitigen Koordinatensystem verdreht ist, zusammensetzt. Eine bei Einbau des Umfeldsensors in das Schienenfahrzeug durchgeführte, sogenannte statische Kalibrierung kann sich während des Fahrzeugbetriebs, etwa durch Vibrationen oder Beschädigungen, verändern. Schone kleine Verdrehungen der Achsausrichtungen um eine Hochachse des Schienenfahrzeugs können dazu führen, dass die seitliche Lage eines Objekts in Bezug auf die Gleismitte falsch erfasst werden kann. Zur Überprüfung der Kalibrierung muss das Schienenfahrzeug daher in regelmäßigen Abständen außer Betrieb genommen und die Lage und Ausrichtung des Umfeldsensors mittels spezieller Messeinrichtungen vermessen und gegebenenfalls korrigiert werden.

Der Erfindung liegt daher die Aufgabe zugrunde, ein Verfahren zur Überprüfung der extrinsischen Kalibrierung eines in einem Schienenfahrzeug angeordneten Umfeldsensors anzugeben, welches während des regulären Fahrzeugbetriebs möglich ist.

Die Aufgabe wird erfindungsgemäß gelöst durch ein Verfahren mit den in Patentanspruch 1 angegebenen Merkmalen.

Mit dem erfindungsgemäß rechnergestützten Verfahren wird die Kalibrierung eines auf einem Schienenfahrzeug angeordneten Umfeldsensors während der Fahrt überprüft. Der Umfeldsensor dient der Erfassung von Bilddatensätzen, die dreidimensionale Positionsdaten von in seinem Sichtfeld liegenden Objekten enthalten. Der Umfeldsensor kann ein Lidarsensor oder jeder andere Sensor sein, der dreidimensionale Positionsdaten eines im Sensorsichtfeld liegenden Gegenstandes in Form einer Punktwolke als Bilddaten erfasst. Liegt der erfasste Gegenstand auf dem befahrenen Gleis, kann er ein Hindernis mit Kollisionsrisiko darstellen. Zur Kalibrierungsüberprüfung wird mit dem Schienenfahrzeug, beispielsweise einer Straßenbahn oder einem Regionalzug, ein geradlinig verlaufender Gleisabschnitt befahren. Währenddessen wird vom Umfeldsensor eine zeitliche Folge von Bilddatensätzen erfasst. In jedem erfassten Bilddatensatz wird ein stationäres Objekt, also beispielsweise ein landseitig fest stehender Mast, Baumstamm, Gebäudeteil oder dergleichen, identifiziert und Positionsdaten eines nachverfolgten Punktes der zugeordneten Punktwolke zu einer Folge von Positionsdaten des Objektes zusammengefasst. Aus der ermittelten Folge von Positionsdaten wird eine Relativbewegungsrichtung des stationären Objektes relativ zum Schienenfahrzeug bestimmt. Da sich das Schienenfahrzeug auf einer Geraden bewegt, müssen sich die stationären Objekte aus Sicht des Schienenfahrzeug-Koordinatensystems ebenfalls auf einer Geraden bewegen. Zwischen der bestimmten Relativbewegungsrichtung und einer sich aus dem Verlauf des befahrenen Gleisabschnitts ergebenden Fahrtrichtung des Schienenfahrzeugs wird schließlich ein Winkelversatz berechnet. Ist der Winkelversatz Null oder hinreichend klein, so ergibt die Überprüfung, dass die aktuelle Kalibrierung des Umfeldsensors nicht korrigiert werden muss. Das Verfahren hat den Vorteil, dass es insbesondere eine Dekalibrierung des sogenannten Gierwinkles, also eines um die Hochachse des Schienenfahrzeugs gemessenen Winkelversatzes, erkennt - und zwar während der Fahrt. Das Verfahren ist einfach rechnergestützt zu implementieren und erfodert keine Installation von Kalibriermarkierungen oder anderen Eingriffe in die bestehende Infrastruktur.

In einer vorteilhaften Ausführungsform des erfindungsgemäßen Verfahrens wird zur Ermittlung der Folge von Positionsdaten eine aktuelle Kalibrierung des Umfeldsensors für eine Koordinatentransformation der erfassten Bilddaten von einem sensorseitigen Koordinatensystem in ein fahrzeugseitiges Koordinatensystem verwendet. Mit der aktuellen Kalibrierung des Umfeldsensors, die bei Einbau oder der letzten Wartung des Umfeldsensors statisch durchgeführt wurde, können die vom Umfeldsensor erfassten und auf sein Koordniatensystem referenzierten Positionsdaten des stationären Objekts in das Koordinatensystem des Schienenfahrzeugs transformiert werden, so dass die Positionsdaten zur Weiterverarbeitung nun auf das Schienenfahrzeug bezogen sind.

In einer weiteren vorteilhaften Ausführungsform des erfindungsgemäßen Verfahrens wird aus der erfassten Folge von Bilddatensätzen eine Folge von Positionsdaten mehrerer stationärer Objekte ermittelt. Daraus werden Bewegungsrichtungen für jedes der mehreren stationären Objekte relativ zum Schienenfahrzeug berechnet. Mittels eines robusten Schätzalgorithmus, beispielsweise eines sogenannten RANSAC-Verfahrens (RANSAC steht kurz für Random Sample Consensus und bedeutet auf deutsch "Übereinstimmung mit einer zufälligen Stichprobe"), wird aus den berechneten Bewegungsrichtungen die gemeinsame Relativbewegungsrichtung der stationären Objekte relativ zum Schienenfahrzeug bestimmt. Hierdurch ergibt sich ein zuverlässigerer Wert für die Relativbewegungsrichtung.

In einer weiteren vorteilhaften Ausführungsform des erfindungsgemäßen Verfahrens wird der zu befahrende, geradlinig verlaufende Gleisabschnitt mittels einer fahrzeugseitigen Empfangseinrichtung für Positionssignale eines globalen Satellitensystems ermittelt. Um das Überprüfungsverfahren zu starten, kann mittels eines GPS-Empfängers an Bord des Schienenfahrzeugs dessen Fahrweg bestimmt und mittels induktiver Meldeübertragung herausgefunden werden, ob es sich auf einem geraden Gleisabschnitt befindet.

In einer weiteren vorteilhaften Ausführungsform des erfindungsgemäßen Verfahrens wird der zu befahrende, geradlinig verlaufende Gleisabschnitt mittels einer digitalen Streckennetzkarte, in der Streckenabschnitte mit geradlinig verlaufenden Gleisabschnitten verzeichnet sind, ermittelt. Hierbei wird die aktuelle Position des Schienenfahrzeugs in der Streckennetzkarte bestimmt und aus der Lage der verzeichneten geraden Streckebaschnitte der Start des Überprüfungsverfahrens ermittelt.

In einer weiteren vorteilhaften Ausführungsform des erfindungsgemäßen Verfahrens wird der berechnete Winkelversatz mit einem vorgebbaren Schwellwert verglichen, wobei bei Überschreitung des Schwellwertes eine Dekalibrierungsmeldung erfolgt. Durch geeignete Wahl eines Schwellwertes wird vermieden, dass eine Dekalibrierungsmeldung bei minimalem Winkelversatz ausgelöst wird, der eine neue Kalibrierung noch nicht erfordert. Indem der Schwellwert durch den Schienenfahrzeugbetreiber vorgebbar ist, kann dieser für unterschiedliche Umfeldsensoren, Schienenfahrzeuge, Fahrstrecken und Fahrgeschwindigkeiten passend eingestellt werden. Die Meldung kann an den Schienenfahrzeugführer und zusätzlich an eine Betriebszentrale des Schienenfahrzeugbetreibers übertragen werden, um eine Rekalibrierung des Umfeldsensors zu veranlassen.

In einer weiteren vorteilhaften Ausführungsform des erfindungsgemäßen Verfahrens wird der berechnete Winkelversatz mit einem vorgebbaren Schwellwert verglichen, wobei bei Überschreitung des Schwellwertes die aktuelle Kalibrierung des Umfeldsensors während der Fahrt automatisiert um den berechneten Winkelversatz korrigiert wird. In dieser Ausführungsform kann die Rekalibrierung des Umfeldsensors über eine Stellaktorik für seine Achsenausrichtung automatisiert während der Fahrt erfolgen.

Weitere Vorteile und Eigenschaften des erfindungsgemäßen Verfahrens ergeben sich aus nachfolgender Beschreibung eines Ausführungsbeispiels anhand der Zeichnungen, in deren
- FIG 1: ein Schienenfahrzeug während des Überprüfungsverfahrens in Draufsicht und
- FIG 2: ein Ablaufdiagramm des erfindungsgemäßen Überprüfungsverfahrens
schematisch veranschaulicht sind.

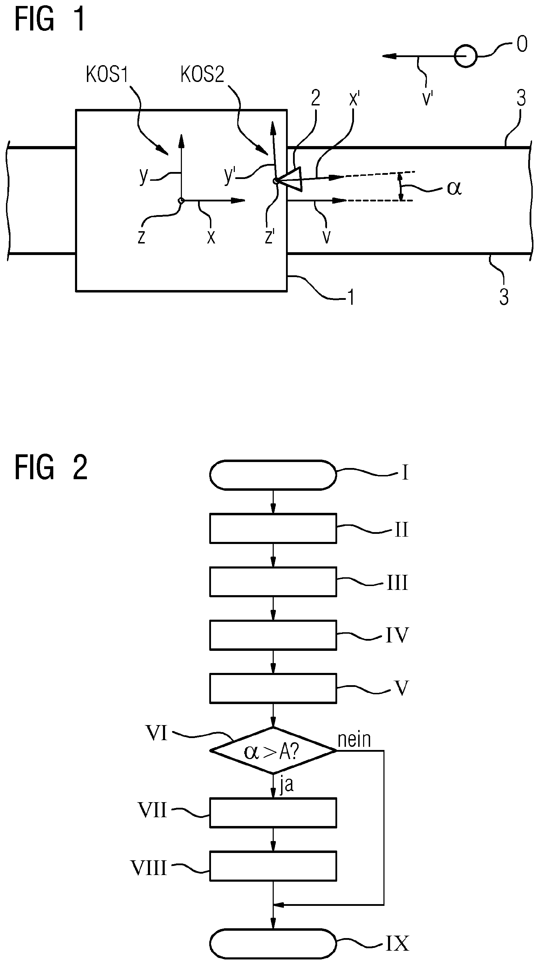

Gemäß FIG 1 ist auf einem Schienenfahrzeug 1, beispielsweise am Bug einer Straßenbahn oder eines Regionalzugs, ein als Lidarsensor ausgebildeter Umfeldsensor 2 angeordnet. Ein fahrzeugseitiges Koordinatensystem KOS1 definiert orthogonal zueinander eine Fahrzeuglängsachse x, eine Fahrzeugquerachse y und eine Fahrzeughochachse z, wobei dessen Ursprung geeignet festgelegt wird, beisielsweise seitenmittig am Bug des Schienenfahrzeugs 1. Ein sensorseitiges Koordinatensystem KOS2 definiert orthogonal zueinander eine Sensorlängsachse x', eine Sensorquerachse y' und eine Sensorhochachse z', wobei dessen Ursprung mittig im optischen Detektor des Umfeldsensors 2 liegen kann. In einer Kalibrierung des Umfeldsensors 2 können die entsprechenden Achsen der Koordinatensysteme KOS1 und KOS2 parallel zueinander ausgerichtet sein. Dargestellt ist in FIG 1 jedoch eine Dekalibrierung des Umfeldsensors 2, bei welcher das sensorseitige Koordinatensystem KOS2 mit dem Umfeldsensor 2 um die Sensorhochachse z' um einen Winkelversatz α verdreht ist, was durch Vibrationen im Betrieb des Schienenfahrzeugs 1 entstanden sein kann. Die Längsachsen x und x' sind daher nicht mehr zueinander parallel ausgerichtet, sondern weisen den Winkelversatz α auf. Befährt das Schienenfahrzeug 1 einen geradlinig verlaufenden Gleisabschnitt 3 in Fahrtrichtung v, so nimmt der Umfeldsensor 2 eine Relativbewegungsrichtung v' eines stationären Objektes O, beispielsweise eines links vom Gleisabschnitt 3 stehenden Mastes, bei korrekter Kalibrierung als antiparallel zur Fahrtrichtung v des Schienenfahrzeugs 1 wahr; bei Dekalibrierung gemäß FIG 1 erfasst der Umfeldsensor 2 eine unter dem Winkelversatz α verlaufende Relativbewegungsrichtung v'. Diese Umstand ausnutzend kann die Kalibrierung eines Umfeldsensors 1 mit dem in FIG 2 beschriebenen Verfahren überprüft werden.

Gemäß FIG 2 kann während der Fahrt des Schienenfahrzeugs 1 die Überprüfung der Kalibrierung eines am Schienenfahrzeug angeordneten Umfeldsensors 2 in Schritt I starten, sobald dieses einen geradlinig verlaufenden Gleisabschnitt 3 ausreichender Länge befährt. Um einen solchen Gleisabschnitt 3 zu ermitteln, kann das Schienenfahrzeug 1 eine GPS-Empfangseinrichtung oder eine digitale Streckennetzkarte zuhilfe nehmen. In einem zweiten Schritt II erfasst der Umfeldsensor 2 eine Folge von Bilddatensätzen, während das Schienenfahrzeug 1 auf dem geraden Gleisabschnitt 3 in Fahrtrichtung v fährt. Jeder Bilddatensatz enthält dreidimensionale Positionsinformationen von im Sichtfeld des Umfeldsensors 2 befindlichen Objekten, die als Puntwolken darstellbar sind. In einem dritten Schritt III wird in den Biddatensätzen der aufgenommenen Folge ein stationäres Objekt O identifiziert und dessen Folge von Positionsdaten ermittelt. Bei der Transformation der Koordinaten vom erfassenden sensorseitigen Koordinatensystem KOS2 in das nutzende fahrzeugseitige Koordinatensystem KOS1 wird eine aktuelle Kalibrierung des Umfeldsensors 2 genutzt. In einem vierten Schritt IV des erfindungsgemäßen Verfahrens wird aus der ermittelten Folge von Positionsdaten eine Relativbewegungsrichtung v' des stationären Objektes O relativ zum Schienenfahrzeug 1 bestimmt. In einem fünften Schritt V wird ein Winkelversatz α zwischen der bestimmten Relativbewegungsrichtung v' und der sich aus dem Verlauf des befahrenen Gleisabschnitts 3 ergebenden Fahrtrichtung v des Schienenfahrzeugs 1 berechnet. In einem sechsten Schritt VI des erfindungsgemäßen Verfahrens wird der berechnete Winkelversatz α mit einem vorgebbaren Schwellwert A verglichen. Überschreitet der Winkelversatz α den Schwellwert A, so erfolgt in einem siebten Schritt VII eine Dekalibrierungsmeldung an den Schienenfahrzeugführer. In einem achten Schritt VIII des erfindungsgemäßen Verfahrens wird die aktuelle Kalibrierung des Umfeldsensors 2 während der Fahrt automatisiert um den Winkelversatz α korrigiert. Anschließend oder falls der Schwellwert A in Schritt VI nicht überschritten wird, endet das Überprüfungsverfahren in Schritt IX.

## Patentansprüche

1. Verfahren zur Überprüfung der Kalibrierung eines auf einem Schienenfahrzeug (1) angeordneten Umfeldsensors (2), der zur Erfassung von Bilddatensätzen, die dreidimensionale Positionsdaten von in seinem Sichtfeld liegenden Objekten (O) enthalten, ausgebildet ist,
- wobei mit dem Schienenfahrzeug (1) ein geradlinig verlaufender Gleisabschnitt (3) befahren und währenddessen vom Umfeldsensor (2) eine Folge von Bilddatensätzen erfasst wird,
- wobei aus der erfassten Folge von Bilddatensätzen eine Folge von Positionsdaten wenigstens eines stationären Objektes (O) ermittelt wird,
- wobei aus der ermittelten Folge von Positionsdaten eine Relativbewegungsrichtung (v') des wenigstens einen stationären Objektes (O) relativ zum Schienenfahrzeug (1) bestimmt wird, und
- wobei ein Winkelversatz (α) zwischen der bestimmten Relativbewegungsrichtung (v') und einer sich aus dem Verlauf des befahrenen Gleisabschnitts (3) ergebende Fahrtrichtung (v) des Schienenfahrzeugs (1) berechnet wird.

2. Verfahren nach Anspruch 1,
- wobei zur Ermittlung der Folge von Positionsdaten eine aktuelle Kalibrierung des Umfeldsensors (2) für eine Koordinatentransformation der erfassten Bilddaten von einem sensorseitigen Koordinatensystem (KOS2) in ein fahrzeugseitiges Koordinatensystem (KOS1) verwendet wird.

3. Verfahren nach einem der vorangehenden Ansprüche,
- wobei aus der erfassten Folge von Bilddatensätzen eine Folge von Positionsdaten mehrerer stationärer Objekte (O) ermittelt wird, und
- wobei aus der ermittelten Folge von Positionsdaten Bewegungsrichtungen für jedes der mehreren stationären Objekte (O) relativ zum Schienenfahrzeug (1) berechnet werden, und
- wobei aus den berechneten Bewegungsrichtungen mittels eines Schätzalgorithmus die Relativbewegungsrichtung (v') der stationären Objekte (O) relativ zum Schienenfahrzeug (1) bestimmt wird.

4. Verfahren nach einem der vorangehenden Ansprüche,
- wobei der zu befahrende, geradlinig verlaufende Gleisabschnitt (3) mittels einer fahrzeugseitigen Empfangseinrichtung für Positionssignale eines globalen Satellitensystems ermittelt wird.

5. Verfahren nach einem der vorangehenden Ansprüche,
- wobei der zu befahrende, geradlinig verlaufende Gleisabschnitt (3) mittels einer digitalen Streckennetzkarte, in der Streckenabschnitte mit geradlinig verlaufenden Gleisabschnitten verzeichnet sind, ermittelt wird.

6. Verfahren nach einem der vorangehenden Ansprüche,
- wobei der berechnete Winkelversatz (α) mit einem vorgebbaren Schwellwert (A) verglichen wird, und
- wobei bei Überschreitung des Schwellwertes (A) eine Dekalibrierungsmeldung erfolgt.

7. Verfahren nach einem der vorangehenden Ansprüche,
- wobei der berechnete Winkelversatz (α) mit einem vorgebbaren Schwellwert (A) verglichen wird, und
- wobei bei Überschreitung des Schwellwertes (A) die aktuelle Kalibrierung des Umfeldsensors (2) während der Fahrt automatisiert um den Winkelversatz (α) korrigiert wird.
